# EUROPEAN PATENT SPECIFICATION

(11) **EP 1 930 213 B1**
(45) Date of publication and mention of the grant of the patent: **16.03.2011**
(21) Application number: 07001754.6
(22) Date of filing: 26.01.2007
(51) Int. Cl.: B60R 9/045

(54) **Apparatus for locking cross bar to side bars of roof carrier**
Vorrichtung zur Befestigung einer Querschiene an die Seitenschienen eines Dachträgers
Appareil pour verrouiller une traverse sur les barres latérales d'une galerie du toit

(30) Priority: 04.12.2006 KR 20060121509
(43) Date of publication of application: 11.06.2008
(73) Proprietor: MOLDPIA Co., Ltd., Ulju-gun Ulsan (KR)
(72) Inventor: Lee, Chen Bok, 1398 Jwa-dong Haiwoondai Busan (KR)
(74) Representative: Ganahl, Bernhard

(56) References cited:
- EP-A- 1 055 561
- US-A- 5 715 980

## Description

### BACKGROUND OF THE INVENTION

### 1. Field of the Invention

The present invention relates generally to apparatuses for locking cross bars to side bars of roof carriers and, more particularly, to an apparatus for locking a cross bar to side bars of a roof carrier which is constructed such that the cross bar can be placed in a movable state merely by flexing a wire which couples locking members, inserted into locking holes, to each other.

### 2. Description of the Related Art

As well known to those skilled in the art, a roof carrier is provided on a roof panel of a vehicle for loading leisure sports equipment and other cargo thereon, thus solving the problem of small interior cargo space defined in the vehicle.

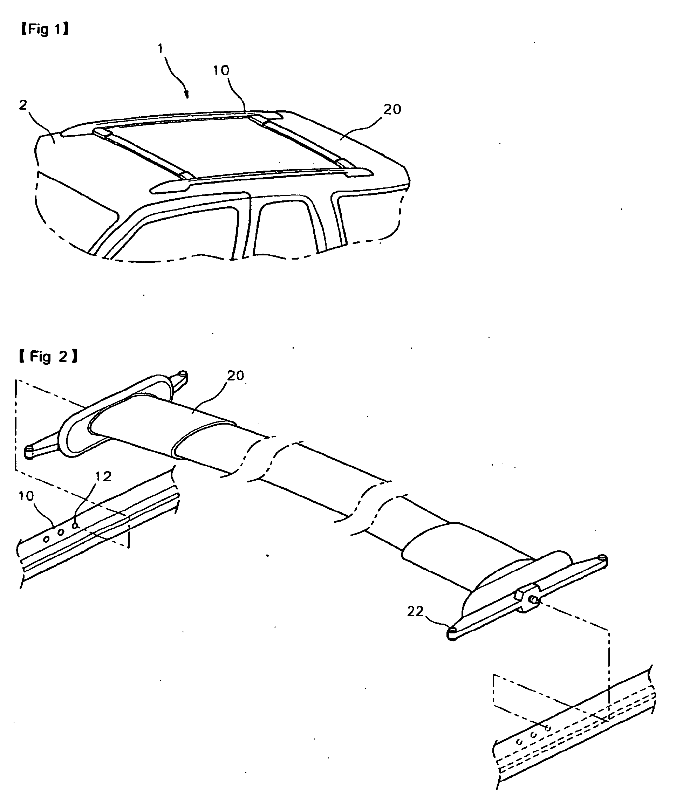

FIG. 1 is a perspective view showing an example of use of side bars and cross bars of a roof carrier according to a conventional technique. FIG. 2 is an exploded perspective view showing a conventional apparatus for locking the cross bar to the side bars of the roof carrier.

As shown in FIG. 1, the conventional roof carrier 1 is provided on a roof panel 2 of a vehicle and includes the side barsé 10, which are provided on opposite sides of the roof panel 2 and are oriented in the longitudinal direction of the vehicle, and the cross bars 20, which are coupled at opposite ends thereof to the side bars 10 in the lateral direction of the vehicle.

In the roof carrier 1, it is necessary to adjust the distance between the cross bars 20 to correspond to the size of a piece of cargo. Therefore, a structure such that a single user can easily lock and unlock the cross bars 20 to and from the side bars 10 is required.

In an effort to meet this requirement, various techniques have been proposed, representative examples of which were proposed in Korean Patent Registration No. 060949 and US Patent Nos. US 6,779,696 and US 6,131,782.

As shown in FIG. 2, such a conventional cross bar has a structure such that locking members thereof are removably inserted into selected locking holes 12, which are formed in the side bars at positions spaced apart from each other at regular intervals. Furthermore, the cross bar is coupled to the side bars so as to be movable forwards and backwards along the side bars using moving rollers 22.

The EP 1055 561 A discloses a vehicle article carrier, which has a single side releasable locking mechanism. The vehicle article carrier includes a pair of slats each having a channel extending longitudinally therealong and a plurality of spaced apart openings longitudinally in a line with the channel. A tubular cross bar includes a pair of actuating members disposed at opposite ends thereof. An opening and a generally circle cross member integrally formed with each actuating lever allow a cable to be entrained between an arm portion and the generally circle member of each actuating member. One end of each cable is fixedly coupled to an actuating pin disposed with an opening in a bracket portion. Each locking member is biased into a normally locked position by a coil spring. The EP 1 055 561 A discloses an apparatus for locking a cross bar according to the preamble of claim 1.

The US 5 715 980 A discloses a vehicle article carrier with moveable cross rails operated from one side of the vehicle. A cross rail is slidably connected by a pair of stanchions and to a pair of laterally spaced side rails. Each of the side rails has a generally open-ended slot formed therein which opens upwardly through the top surface of each of the side rails. A latch bar in the form of a generally rectangular-shaped tab is mounted in and movably extends outward from one side edge of each of the stanchions. The latch bar releasably engages one of a plurality of longitudinal spaced complimentarily shaped bores formed in each of the side rails. An actuator means in the form of a pair of depressible push buttons are respectively mounted in each of the stanchions. Each of the actuator members is mounted in each respective stanchion but is capable of a slight inward movement or depression under manual force. Each of the actuator members has an interiorly disposed projection which engages a continuous cable extending between the latch bars mounted in the stanchions. The latch bars are normally biased outward by a biasing spring seated within each stanchion. Depression of either of the actuator members or push buttons or causes a force to be exerted on the cable which simultaneously retracts each of the latch bars from the respective bores in the side rails to enable several different modes of movement of the cross rail.

However, because the conventional techniques involve complex structures, there are problems in that the manufacturing process is complex and production costs are relatively high.

Furthermore, it may be difficult for a single user to unlock the opposite ends of the cross bar from the side bars, or the process of unlocking the cross bar from the side bars is complex. Thus, the operation of moving the cross bar is very inconvenient for the user.

### SUMMARY OF THE INVENTION

Accordingly, the present invention has been made keeping in mind the above problems occurring in the prior art, and an object of the present invention is to provide an apparatus for locking a cross bar to side bars of a roof carrier which has a simple structure, thus simplifying the manufacturing process and reducing the production costs.

Another object of the present invention is to provide an apparatus for locking a cross bar to side bars of a roof carrier which is convenient to manipulate.

In order to accomplish the above object, the present invention provides an apparatus for locking a cross bar to a pair of side bars of a roof carrier having the features of claim 1. The side bars are provided at opposite sides on a roof panel of a vehicle in a longitudinal direction of the vehicle, with a plurality of locking holes formed in an inner surface of each side bar at positions spaced apart from each other by regular intervals. The cross bar is coupled at opposite ends thereof to the respective side bars in a lateral direction of the vehicle so as to be movable in a longitudinal direction of the pair of side bars. The apparatus includes: a pair of locking members removably inserted into the locking holes of the respective side bars; a wire provided in the cross bar to couple the pair of locking members to each other; and a spacing device to flex the wire and thus remove the locking members from the side bars.

The spacing device may include a pair of compressing members in contact with the wire and provided in the cross bar so as to be movable in a lateral direction of the cross bar to push the wire in one direction; and a stationary support fixed in the cross bar at a position opposite each of positions at which the compressing members contact the wire, such that the wire pushed by the compressing member is flexed at the stationary support.

Furthermore, the stationary support may comprise a pair of rollers fixed to the cross bar, so that the wire is flexed between the pair of rollers by the compressing member.

Each of the compressing members may be provided with a first elastic member, so that, when the compressing member pushed in the one direction is released, the compressing member is returned to an original position thereof by elasticity of the first elastic member. Preferably, the first elastic member may comprise a coil spring.

In addition, each of the compressing members may have a wire seating groove, into which the wire is seated.

As well, each of the locking members may be provided with a second elastic member, so that the locking member is returned to a locking position by elasticity of the second elastic member. Preferably, the second elastic member may comprise a coil spring.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a perspective view showing an example of use of side bars and a cross bar of a roof carrier according to a conventional technique;
FIG. 2 is an exploded perspective view showing a conventional apparatus for locking the cross bar to the side bars of the roof carrier;
FIG. 3 is a plan view of an apparatus for locking a cross bar to side bars of a roof carrier, according to a preferred embodiment of the present invention;
FIG. 4 is a sectional view showing the coupling between a compression unit and a wire of the locking apparatus, according to the embodiment of the present invention; and
FIG. 5 is views showing the operation of the locking apparatus, according to the embodiment of the present invention.

### DESCRIPTION OF THE PREFERRED EMBODIMENTS

Hereinafter, an apparatus for locking a cross bar to side bars of a roof carrier according to a preferred embodiment of the present invention will be described in detail with reference to the attached drawings.

The present invention includes side bars 10, a cross bar 20, locking members 30, a wire 40 and a spacing device 50.

The side bars 10 are provided at opposite sides on the upper surface of a roof of a vehicle and are oriented in the longitudinal direction of the vehicle, in the same manner as the conventional locking apparatus shown in FIG. 2. Preferably, locking holes 12 are formed in the inner surface of each side bar 10 at positions spaced apart from each other by regular intervals.

The cross bar 20 is coupled at opposite ends thereof to the respective side bars 10 in the lateral direction of the vehicle. Preferably, a moving roller 22, which is provided on each end of the cross bar 20, is seated into a groove of each side bar so that the cross bar 20 is movable forwards and rearwards.

Furthermore, the locking members 30 are movably installed in the cross bar 20 and are inserted into the selected locking holes 12 to fasten the cross bar 20 to the side bars 10.

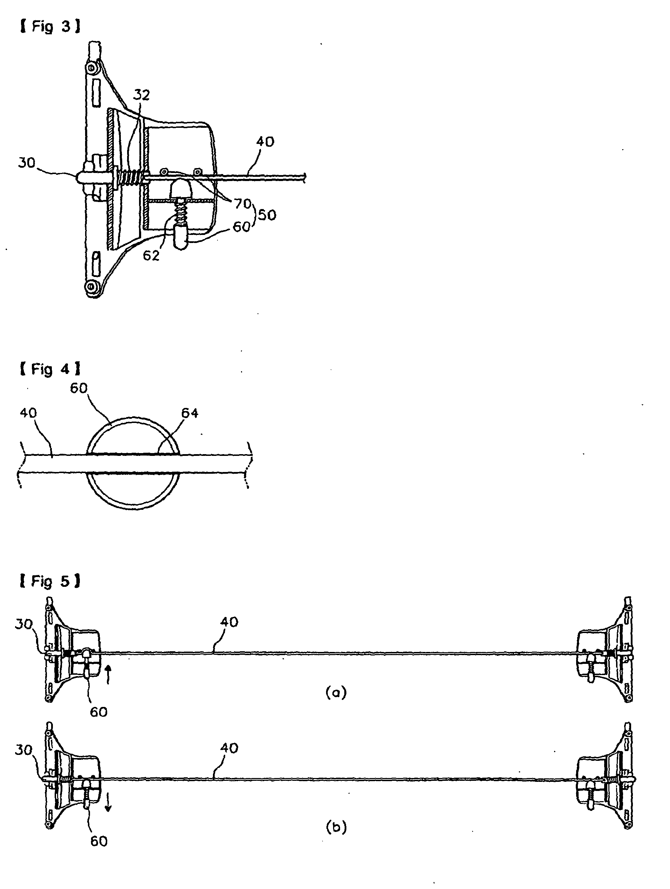

FIG. 3 is a plan view of the locking apparatus according to the preferred embodiment of the present invention.

As shown in the drawing, the locking members 30 protrude outside the respective opposite ends of the cross bar 20 so as to be movable inside the cross bar 20 by the operation of the spacing device 50, which will be explained later herein. Each locking member 30 is provided with a second elastic member 32, so that the locking member 30 is returned to the locking position by the elasticity of the second elastic member 32. It is preferable that a coil spring be used as the second elastic member 32.

Furthermore, preferably, a stopper is provided on the circumferential outer surface of the locking member 30. The stopper is stopped by an internal housing of the cross bar 20, so that the locking member 30 is prevented from protruding from the cross bar 20 beyond a predetermined distance.

Next, the wire 40 will be explained herein below. The wire 40 is coupled between the two locking members 30 through the internal space in the cross bar 20 and serves to insert or remove the locking members 30 into or from the respective locking holes 12 at the same time.

Preferably, the wire 40 is made of material that can be flexed by the spacing device 50 and be returned to its original state using elasticity when it is released from the spacing device 50.

Hereinafter, the spacing device 50 will be described.

The spacing device 50 includes a pair of compressing members 60, which contact the wire 40 and are provided in the cross bar so as to be movable in the lateral direction of the cross bar to push the wire in the lateral direction of the cross bar, and stationary supports 70, which are fixed at a position opposite each compressing member 60 such that the pushed wire 40 is flexed at the stationary supports 70.

The compressing members 60 are provided in the opposite ends of the cross bar 20 and contact the wire 40 in the cross bar 20. The present invention is constructed such that the wire 40 is pushed in the lateral direction of the cross bar by the movement of the compression part 60.

FIG. 4 is a sectional view showing the coupling between the compression unit 60 and the wire 40. As shown in the drawing, it is preferable that the compressing member 60 have in an end thereof a wire seating groove 64, into which the wire 40 is seated, so that the wire 40 is prevented from being undesirably removed from the compressing member 60.

The stationary supports 70 are fixed at positions opposite the position at which each compressing member 60 contacts the wire 40, so that the stationary supports 70 conduct a function such that the wire 40, pushed by the compressing member 60, is flexed at the stationary supports 70. Preferably, the stationary supports 70 comprise a pair of rollers, which are fixed in the cross bar 20.

Here, preferably, the stationary supports 70 are fixed in the cross bar 20 and are constructed such that the wire 40 pushed by the compressing member 60 is flexed between the stationary supports 70, so that the locking members 30, which are coupled to each other by the wire 40, are removed from associated locking holes 12 of the side bars 10 by movement of the compressing member 60.

Furthermore, because the stationary supports 70 contact the wire 40, it is preferable that the stationary supports 70 comprise a pair of rollers to minimize the generation of noise when the spacing device 50 is operated.

The operation of the present invention will be described in detail herein below.

FIG. 5 is views showing the operation of the locking apparatus according to the preferred embodiment of the present invention.

As shown in FIG. 5b, the locking members 30 protrude outside the respective opposite ends of the cross bar 20 and are fitted into the locking holes 12 of the side bars 10. Here, the wire 40 is tightly coupled between the opposite locking members 30 and, more preferably, the tightness thereof is adjusted such that a gap is prevented from being created when the wire 40 is flexed by the spacing device 50.

To move the position at which the cross bar 20 is coupled to the side bars 10, a user pushes the compressing member 60 inside the cross bar 20, as shown in FIG. 5a. Then, the wire 40 is flexed by the compressing member 60 and the stationary supports 70.

Hence, the locking members 30, which are coupled to each other through the wire 40, are moved inside the cross bar 20 and are thus removed from the associated locking holes 12 of the side bar 10. Thereafter, the cross bar 20 is moved to a desired position, and the compressing member, which has been pushed by the user, is released. Then, the compressing member is returned to the original position by a first elastic member 62 and, simultaneously, the locking members 30 protrude from respective opposite ends of the cross bar 20 using the elasticity of the second elastic members 32, and are inserted into the respective desired locking holes 12.

Here, the position at which the wire 40 is flexed must be set such that, when the compressing member 60 is pushed, the opposite locking members 30 can be completely removed from the associated locking holes 12 of the side bars 10. Furthermore, to prevent only one locking member 30 from being removed from the locking hole 12 in the event that the distances that the opposite locking members 30 move differ from each other, the stoppers are preferably provided on the circumferential outer surfaces of the respective locking members 30. Thus, the present invention is constructed such that, after one locking member 30 has been moved a predetermined distance, the movement of the locking member 30 is restricted by the stopper thereof so that the other locking member 30 is moved. Thereby, the opposite locking members 30 can be completely removed from the locking holes 12.

Furthermore, unlike the conventional locking apparatus, in the present invention, even if only one compressing member 60 is manipulated, the opposite locking members 30, which are coupled to each other through the wire 40, can be completely removed from the associated locking holes 12. Therefore, a single user can move the cross bar 20 using one hand.

As such, it will be appreciated that the basic technical spirit of the present invention is to provide an apparatus for locking the cross bar to the side bar of a roof carrier using the flexing motion of the wire. Those skilled in the art will appreciate that various modifications, additions and substitutions are possible, without departing from this basic technical spirit.

As described above, the present invention provides an apparatus for locking a cross bar to side bars of a roof carrier which has a simple structure such that the cross bar can be placed in a movable state merely by flexing a wire which couples locking members, inserted into locking holes, to each other, thus reducing production costs and simplifying the manufacturing process.

Furthermore, the opposite locking members can be removed from the associated locking holes by manipulating only one compressing member, to place the cross bar in the movable state. Therefore, the locking apparatus of the present invention has the advantages of a simple manipulation method and of making it possible for a single user to adjust the position of the cross bar.

## Claims

1. An apparatus for locking a cross bar (20) to a pair of side bars (10) of a roof carrier, the pair of side bars (10) being provided at opposite sides on a roof panel of a vehicle in a longitudinal direction of the vehicle, with a plurality of locking holes (12) formed in an inner surface of each of the pair of side bars (10) at positions spaced apart from each other by regular intervals, the cross bar (20) being coupled at opposite ends thereof to the respective side bars (10) in a lateral direction of the vehicle so as to be movable in a longitudinal direction of the pair of side bars (10), the apparatus comprising:
a pair of locking members (30) removably inserted into the locking holes (12) of the respective side bars (10);
a wire (40) provided in the cross bar (20) to couple the pair of locking members (30) to each other; and
a spacing device (50) to flex the wire (40) and thus remove the locking members (30) from the side bars (10), wherein the spacing (50) device comprises a pair of compressing members (60) in contact with the wire (40) and provided in the cross bar (20) so as to be movable in a lateral direction of the cross bar (20) to push the wire (40) in one direction; and
a stationary support (70) fixed in the cross bar (20) at a position opposite each of positions at which the compressing members (60) contact the wire (40), such that the wire (40) pushed by the compressing member (60) is flexed at the stationary support (70),
**characterized by** the fact,
that each of the compressing members (60) is provided with a first elastic member (62), so that, after pushing the compressing member (60) in the direction to release the locking members (30), the compressing member (60) is returned to an original position thereof by elasticity of the first elastic member (62).

2. The apparatus as set forth in claim 1, wherein the stationary support comprises a pair of rollers (70) fixed to the cross bar (20), so that the wire (40) is flexed between the pair of rollers (70) by the compressing member (60).

3. The apparatus as set forth in claim 1, wherein the first elastic member (62) comprises a coil spring.

4. The apparatus as set forth in claim 2, wherein each of the compressing members (60) has a wire seating groove (64), into which the wire (40) is seated.

5. The apparatus as set forth in claim 1, wherein each of the locking members (30) is provided with a second elastic member (32), so that the locking member (30) is returned to a locking position by elasticity of the second elastic member (32).

6. The apparatus as set forth in claim 5, wherein the second elastic member (32) comprises a coil spring.

## Patentansprüche

1. Vorrichtung zum Fixieren eines Querholms (20) an einem Paar Seitenholme (10) eines Dachträgers, wobei das Paar Seitenholme (10) an gegenüberliegenden Seiten eines Daches eines Fahrzeuges in Längsrichtung des Fahrzeuges angeordnet ist und eine Vielzahl von Verriegelungslöchern (12), gleich beabstandet voneinander, an einer inneren Oberfläche an jedem Seitenholm (10) des Paares ausgebildet sind, wobei die gegenüberliegenden Enden des Querholms (20) mit dem entsprechenden Seitenholm (10) in Querrichtung des Fahrzeuges verbunden sind, so dass dieser in Längsrichtung des Paares Seitenholme (10) verschiebbar ausgebildet ist, wobei die Vorrichtung umfasst,
ein Paar Verriegelungsmittel (30), die entfernbar in die Verriegelungslöcher (12) der entsprechenden Seitenholme (10) eingesetzt sind,
einen in dem Querholm (20) angeordneten Draht, mittels dem die Verriegelungsmittel (30) miteinander verbunden sind,
eine Abstandseinrichtung (50) zum Biegen des Drahtes (40), um die Verriegelungsmittel (30) aus den Seitenholmen (10) zu entfernen, wobei die Abstandseinrichtung (50) ein Paar Druckmittel (60) umfasst, welche den Draht (40) kontaktieren und die im Querholm (20) derart angeordnet sind, dass diese in Querrichtung des Querholms (20) verschiebbar sind, um den Draht (40) in eine Richtung zu drücken, und
ein ortsfestes Unterstützungsmittel (70) welches im Querholm (20), an einer der Position an der die Druckmittel (60) den Draht (40) kontaktieren gegenüberliegenden Seite, fixiert ist, so dass der vom Druckmittel (60) gedrückte Draht am ortsfesten Unterstützungsmittel (70) gebogen wird,
**dadurch gekennzeichnet,**
**dass** jedes der Druckmittel (60) ein erstes elastisches Mittel (62) derart aufweist, dass nach dem Drücken des Druckmittels (60), in eine Richtung zum Lösen der Verriegelungsmittel (30), das Druckmittel (60) in eine Ausgangsposition durch die Elastizität des ersten elastischen Mittels (62) zurückgestellt wird.

2. Vorrichtung gemäß Anspruch 1, wobei das stationäre Unterstützungsmittel (70) ein Paar Rollen (70) umfasst, die am Querholm (20) derart fixiert sind, dass der Draht (40) zwischen dem Paar Rollen (70) durch das Druckmittel (60) gebogen wird.

3. Vorrichtung gemäß Anspruch 1, wobei das erste elastische Mittel (62) eine Schraubenfeder umfasst.

4. Vorrichtung gemäß Anspruch 2, wobei jedes der Druckmittel (60) eine Drahtaufnahmenut (64) aufweist, in der der Draht (40) aufgenommen ist.

5. Vorrichtung gemäß Anspruch 1, wobei jedes Verriegelungsmittel (30) derart mit einem zweiten elastischen Mittel (32) versehen ist, so dass das Verriegelungsmittel (30) aufgrund der Elastizität des zweiten elastischen Mittels (32) in eine Verriegelungsposition zurück gestellt wird.

6. Vorrichtung gemäß Anspruch 5, wobei das zweite elastische Mittel (32) eine Schraubenfeder umfasst.

## Revendications

1. Appareil pour verrouiller une traverse (20) sur une paire de barres latérales (10) d'un support sur toiture, la paire de barres latérales (10) étant prévues sur des côtés opposés d'un panneau de toiture d'un véhicule dans une direction longitudinale du véhicule, avec une pluralité de trous de verrouillage (12) formés dans une surface intérieure de chacune de la paire de barres latérales (10) à des positions espacées l'une de l'autre à intervalles réguliers, la traverse (20) étant couplée à ses extrémités opposées aux barres latérales respectives (10) dans une direction latérale du véhicule de manière à être déplaçable dans une direction longitudinale de la paire de barres latérales (10), l'appareil comprenant :
une paire d'éléments de verrouillage (30) insérés de façon amovible dans les trous de verrouillage (12) des barres latérales respectives (10) ;
un fil (40) prévu dans la traverse (20) pour couplée la paire d'éléments de verrouillage (30) l'un à l'autre ; et
un dispositif d'écartement (50) pour faire fléchir le fil (40) et ainsi enlever les éléments de verrouillage (30) depuis les barres latérales (10), dans lequel le dispositif d'écartement (50) comprend une paire d'éléments de compression (60) en contact avec le fil (40) et prévus dans la traverse (20) de manière à être déplaçables dans une direction latérale de la traverse (20) pour pousser le fil (40) dans une direction ; et
un support stationnaire (70) fixé dans la traverse (20) à une position opposée de chacune des positions auxquelles les éléments de compression (60) sont en contact avec le fil (40), de telle façon que le fil (40) poussé par l'élément de compression (60) est fléchi au niveau du support stationnaire (70),
**caractérisé en ce que**
chacun des éléments de compression (60) est pourvu d'un premier élément élastique (62) de telle façon que, après avoir poussé l'élément de compression (60) dans la direction pour relâcher les éléments de verrouillage (30), l'élément de compression (60) est ramené à sa position d'origine par l'élasticité du premier élément élastique (62).

2. Appareil selon la revendication 1, dans lequel le support stationnaire comprend une paire de rouleaux (70) fixés sur la traverse (20) de telle façon que le fil (40) est fléchi entre la paire de rouleaux (70) par l'élément de compression (60).

3. Appareil selon la revendication 1, dans lequel le premier élément élastique (62) comprend un ressort à boudin.

4. Appareil selon la revendication 2, dans lequel chacun des éléments de compression (60) comporte une gorge de logement de fil (64) dans laquelle le fil (40) est logé.

5. Appareil selon la revendication 1, dans lequel chacun des éléments de verrouillage (30) est pourvu d'un second élément élastique (32), de sorte que l'élément de verrouillage (30) est ramené à une position de verrouillage par l'élasticité du second élément élastique (32).

6. Appareil selon la revendication 7, dans lequel le second élément élastique (32) comprend un ressort à boudin.
